# EUROPÄISCHE PATENTSCHRIFT

(11) **EP 0 720 552 B1**
(45) Veröffentlichungstag und Bekanntmachung des Hinweises auf die Patenterteilung: **16.07.1997**
(21) Anmeldenummer: 94927476.5
(22) Anmeldetag: 21.09.1994
(51) Int. Cl.: B60T 8/36, B60T 8/50, F16K 31/06, G05D 16/20

(54) **ELEKTROMAGNETISCH BETÄTIGTES VENTIL, INSBESONDERE FÜR SCHLUPFGEREGELTE HYDRAULISCHE BREMSANLAGEN IN KRAFTFAHRZEUGEN**
ELECTROMAGNETICALLY ACTUATED VALVE, ESPECIALLY FOR HYDRAULIC ANTI-LOCK BRAKING SYSTEMS IN MOTOR VEHICLES
SOUPAPE A COMMANDE ELECTROMAGNETIQUE, NOTAMMENT POUR SYSTEMES DE FREINAGE HYDRAULIQUES ANTIPATINAGE POUR AUTOMOBILES

(30) Priorität: 23.09.1993 DE 4332372
(43) Veröffentlichungstag der Anmeldung: 10.07.1996
(73) Patentinhaber: ROBERT BOSCH GMBH, 70442 Stuttgart (DE)
(72) Erfinder: MUELLER, Klaus, D-71732 Tamm (DE); HEUGLE, Bernhard, D-71723 Grossbottwar (DE); HERZOG, Kurt, D-74321 Bietigheim-Bissingen (DE); OEHLER, Martin, D-74211 Leingarten (DE); HOHL, Günther, D-70569 Stuttgart (DE); HERDERICH, Hans-Jürgen, D-71394 Kernen (DE)
(86) Internationale Anmeldenummer: DE9401099
(87) Internationale Veröffentlichungsnummer: WO9508463

(56) Entgegenhaltungen:
- WO-A-92/04214
- DE-A- 2 909 768
- DE-A- 3 607 693
- DE-A- 3 802 648
- DE-A- 4 035 817
- DE-C- 3 934 771
- GB-A- 2 185 299

## Beschreibung

### Stand der Technik

Die Erfindung geht aus von einem elektromagnetisch betätigten Ventil, insbesondere für schlupfgeregelte hydraulische Bremsanlagen in Kraftfahrzeugen, nach der Gattung des Hauptanspruchs.

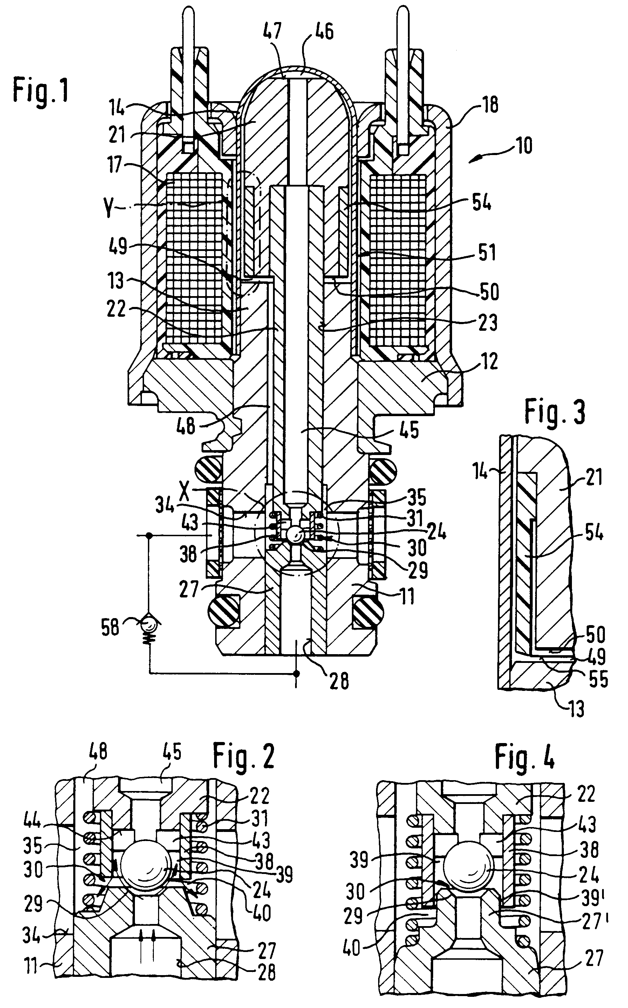

Ein solches Ventil ist durch DE 39 34 771 C1, Figur 3 bekannt. Es weist einen im Ventildom angeordneten, einen Anschlag für den Magnetanker bildenden Steuerkolben auf, der auf einem vom Ventilkörper ausgehenden, den Magnetanker durchdringenden Zapfen längsverschiebbar geführt ist. Der Steuerkolben begrenzt mit seinem ankerabgewandten Boden eine Steuerkammer, welche durch einen den Zapfen und den Steuerkolben gleichachsig durchdringenden Druckmittelkanal mit dem Druckmitteleinlaß des bekannten Ventils in Verbindung steht. Während der Magnetanker an beiden Stirnseiten druckausgeglichen ist, vermag in die Steuerkammer eingesteuerter Druck den Steuerkolben gegen einen Anschlag axial zu verschieben. Hierdurch verringert sich der Hub des Magnetankers um ein vorbestimmtes Maß, was eine Drosselung des Durchflußquerschnitts zur Folge hat.

Diese Wirkungsweise des bekannten Ventils ist nutzbar in schlupfgeregelten hydraulischen Bremsanlagen, bei denen der Druckmitteleinlaß mit dem Hauptbremszylinder und der Druckmittelauslaß mit einem Radbremszylinder in Verbindung stehen. Wird z.B. bei einer Bremsschlupfregelung das Ventil durch Erregen der Magnetspule in seine Schließstellung geschaltet und beim Vermindern des Druckes im Radbremszylinder ein Druckgefälle ausreichender Höhe zwischen dem Druckmitteleinlaß und dem Druckmittelauslaß erzeugt, so bewirkt dies das vorstehend beschriebene Verschieben des Steuerkolbens mit der Folge, daß beim Öffnen des Ventils die erwähnte Drosselung des Durchflußquerschnittes wirksam wird, solange der Druckunterschied zwischen Einlaß und Auslaß besteht. Die Minderung des Durchflußquerschnittes wirkt sich wegen des verringerten Druckgradienten beim auf einen Druckabbau folgenden Druckaufbau einer Bremsschlupfregelung günstig auf die Regelgüte und das Geräuschverhalten der Bremsanlage aus. Bei einer normalen Bremsung ohne Blockiergefahr steht dagegen der volle Durchflußquerschnitt des Ventils zur Verfügung, was eine angestrebte kurze Ansprechzeit der Bremsanlage bei Bremsbetätigung fördert.

Bei dem bekannten Ventil ist jedoch die Festeinstellung des gedrosselten Durchflußquerschnittes nachteilig, weil hierdurch die Durchflußmenge differenzdruckabhängigen Schwankungen unterworfen ist. Außerdem ist die Durchflußmenge ganz wesentlich von dem Absolutmaß des Durchflußquerschnitts abhängig, d.h. der Anschlag bedarf einer sehr engen Tolerierung. Ferner ist das Ventil aufgrund des benötigten Steuerkolbens relativ kostenaufwendig.

### Vorteile der Erfindung

Das erfindungsgemäße Ventil mit den kennzeichnenden Merkmalen des Hauptanspruchs hat demgegenüber den Vorteil, daß sich der Durchflußquerschnitt des ersten Sitzventils bei geschlossenem zweiten Sitzventil in Abhängigkeit von den am Anker wirkenden Kräften, jedoch ohne Magnetkraft, bei ausreichend großem Druckgefälle zwischen Einlaß- und Auslaßseite des Ventils selbsttätig auf weitgehend konstante, gegenüber der vollen Öffnung des ersten Sitzventils geringere Durchflußmengen einstellt. Der bauliche Aufwand zur Erzielung dieser Funktionsweise des erfindungsgemäßen Ventils als Stromregelventil ist außerordentlich gering.

Durch die in den Unteransprüchen aufgeführten Maßnahmen sind vorteilhafte Weiterbildungen und Verbesserungen des im Hauptanspruch angegebenen Ventils möglich.

Besonders vorteilhaft hinsichtlich Kosten und Funktionssicherheit ist die Ausgestaltung des zweiten Sitzventils mit nur einem, mit dem Ventilsitz zusammenwirkenden Bauteil, dessen Elastizität genutzt wird, um die Schließstellung über einen gewissen Hubbereich des Magnetankers aufrechtzuerhalten.

Darüber hinaus zeichnet sich in vorteilhafter Weise die Führung des Druckmittelstrahls in den von dem Leitkörper umgrenzten Raum aus, weil der hiermit erzeugte Staudruck das am Magnetanker wirkende Druckgefälle verstärkt.

### Zeichnung

Ein Ausführungsbeispiel der Erfindung ist in der Zeichnung vereinfacht dargestellt und in der nachfolgenden Beschreibung näher erläutert. Es zeigen Figur 1 einen Längsschnitt durch ein elektromagnetisch betätigtes Ventil, Figur 2 eine in Figur 1 mit X gekennzeichnete Einzelheit im Bereich eines Sitzventiles, Figur 3 eine in Figur 1 mit Y gekennzeichnete Einzelheit eines anderen Sitzventils und Figur 4 eine Variante des Sitzventils nach Figur 2; sämtliche Figuren 2 bis 4 im Schnitt sowie in von Figur 1 abweichendem Maßstab.

### Beschreibung des Ausführungsbeispieles

Ein elektromagnetisch betätigtes Ventil 10 weist ein zur Aufnahme in einem nicht dargestellten Ventilblock bestimmtes Ventilgehäuse 11 auf, welches mit einer Jochscheibe 12 fest verbunden ist (Fig. 1). Das Ventilgehäuse 11 ist über die Jochscheibe 12 hinaus mit einem Polkern 13 fortgesetzt. Auf den Polkern 13 ist ein rohrförmiger Ventildom 14 aufgesteckt. Er ist durch Schweißung mit dem Polkern 13 dicht verbunden. Polkernabgewandt besitzt der Ventildom 14 einen halbkugelförmigen Abschluß.

Der Ventildom 14 ist von einer ringförmigen Magnetspule 17 umgriffen. Ein glockenförmiges Gehäuse 18 umschließt die Magnetspule 17. Das Gehäuse 18 greift einerseits am Ventildom 14 an; andererseits ist es mit der Jochscheibe 12 verbunden.

Im spulenseitig geschlossenen Ventildom 14 ist ein im wesentlichen kreiszylindrischer Magnetanker 21 längsbewegbar aufgenommen. Vom Magnetanker 21 geht ein mit diesem fest verbundener Ventilstößel 22 aus. Der Ventilstößel 22 ist in einer Längsbohrung 23 des Ventilgehäuses 11 mit Spiel aufgenommen. An seinem ankerabgewandten Ende trägt der Ventilstößel 22 ein kugelförmig ausgebildetes Schließglied 24. Das im Ausführungsbeispiel als Vollkugel ausgestaltete Schließglied 24 ist mit dem Ventilstößel 22 stoffschlüssig verbunden. Abweichend vom Ausführungsbeispiel kann das Schließglied 24 ankerabgewandt auch die Gestalt einer Halbkugel oder eines Kegels bzw. Kugelstumpfs besitzen.

In den ankerabgewandten Abschnitt der Längsbohrung 23 ist ein hülsenförmiger Ventilkörper 27 mit einer Stufenbohrung 28 eingepreßt, welche in einen Ventilsitz 29 mündet. Der Ventilsitz 29 ist als kegelförmige Ansenkung mit einem Kegelwinkel von vorzugsweise 90° ausgebildet. Das Schließglied 24 und der Ventilsitz 29 bilden ein erstes Sitzventil 30 des elektromagnetisch betätigten Ventiles 10. Bei nicht erregter Magnetspule 17 nimmt das erste Sitzventil 30 aufgrund der Wirkung einer einerseits am Ventilstößel 22 und andererseits am Ventilkörper 27 angreifenden, vorgespannten Rückstellfeder 31 seine Offenstellung als Ruhestellung ein.

Das Ventilgehäuse 11 ist mit einer rechtwinklig die Längsbohrung 23 kreuzenden Querbohrung 34 versehen. Im Durchdringungsbereich beider Bohrungen 23 und 34 ist eine das erste Sitzventil 30 aufnehmende Ventilkammer 35 geschaffen. Die Ventilkammer 35 steht einerseits über den Ventilsitz 29 und die Stufenbohrung 28 mit einem Druckmitteleinlaß in Verbindung; andererseits ist ein von der Querbohrung 34 gebildeter Druckmittelauslaß an die Ventilkammer angeschlossen.

In der Ventilkammer 35 befindet sich außer dem ersten Sitzventil 30 und der Rückstellfeder 31 auch ein Leitkörper 38 für Druckmittel (Fig. 2). Der Leitkörper 38 ist hülsenförmig ausgebildet und gleichachsig zum Ventilstößel 22 verlaufend an diesem befestigt. Der Leitkörper 38 umgreift das Schließglied 24 des ersten Sitzventils 30 unter Bildung eines Radialspaltes 39 und erstreckt sich unter Bildung eines Axialspaltes 40 bis nahe an den Ventilkörper 27, wie dies deutlich aus Figur 2 ersichtlich ist. Der Axialspalt 40 besitzt in der Ruhestellung des Ventils 10 ein gegenüber dem Ventilhub größeres Maß, d.h. in der die Arbeitsstellung des Ventils 10 bildenden Schließstellung des ersten Sitzventils 30, in welcher das Schließglied 24 am Ventilsitz 29 angreift, ist der Axialspalt 40 auf ein Mindestmaß verkleinert.

Der Leitkörper 38 trennt von der Ventilkammer 35 eine Teilkammer 43 ab. Diese Ventilteilkammer 43 steht durch einen ventilsitzabgewandt gelegenen Querschlitz 44 des Ventilstößels 22 mit einem als durchgehende Längsbohrung im Ventilstößel und im Magnetanker 21 ausgebildeten ersten Druckmittelkanal 45 in Verbindung. Der erste Druckmittelkanal 45 führt zu einer Steuerkammer 46, die zwischen der schließgliedfernen Stirnseite 47 des Magnetankers 21 und dem halbkugelförmigen Abschluß des Ventildomes 14 gelegen ist. Außerhalb des Leitkörpers 38 geht außerdem von der Ventilkammer 35 ein von einer Abflachung des ansonsten kreisförmigen Querschnitt aufweisenden Ventilstößels 22 gebildeter, zweiter Druckmittelkanal 48 aus. Dieser endet in einer Ausgleichskammer 49, die zwischen der schließgliednahen Stirnseite 50 des Magnetankers 21 und dem Polkern 13 des Ventils 10 angeordnet ist. Im der gezeichneten Ruhestellung des Ventils 10 sind die Steuerkammer 46 und die Ausgleichskammer 49 entlang der Mantelfläche des Magnetankers 21 druckmittelleitend miteinander verbunden. Diese Verbindung ist durch ein zweites Sitzventil 51 schaltbar.

Das Sitzventil 51 besteht aus einem umfangsseitig am Magnetanker 21 gleichachsig aufgenommenen, geraden Hohlzylinder als Schließkörper 54, welcher mit dem Polkern 13 als Ventilsitz zusammenwirkt (Figur 3). Im polkernfernen Bereich ist der Schließkörper 54 mit Preßsitz am Magnetanker 21 gehalten. Im übrigen Bereich verläuft der Schließkörper 54 mit Spiel entlang dem Magnetanker 21 und endet, über die schließgliednahe Ankerstirnseite 50 ragend, in einer Dichtschneide 55. Sein Überstand beträgt etwa die Hälfte des Magnetankerhubes beim Schalten des Ventiles 10. Der Schließkörper 54 besteht aus einem elastisch nachgiebigen Kunststoff, der nach dem Auftreffen der Dichtschneide 55 auf den Polkern 13 den verbleibenden Hub des Magnetankers 21 in die Schließstellung des ersten Sitzventils 30 ohne nennenswerten Widerstand zuläßt.

Das Ventil 10 ist insbesondere für die Verwendung in schlupfgeregelten hydraulischen Bremsanlagen von Kraftfahrzeugen bestimmt. Es ist in Übereinstimmung mit der in Figur 1 der eingangs erwähnten DE-39 34 771 C1 dargestellten Bremsanlage als Einlaßventil in einer Bremsleitung zwischen einem Hauptbremszylinder und einem Radbremszylinder anzuordnen. Der von der Stufenbohrung 28 gebildete Druckmitteleinlaß steht dann mit dem Hauptbremszylinder, die Querbohrung 34 als Druckmittelauslaß mit dem Radbremszylinder in Verbindung. Das Ventil 10 ist von einer Rückführleitung umgehbar, welche auf der Seite des Radbremszylinders von der Bremsleitung ausgeht und auf der Seite des Hauptbremszylinders wieder in die Bremsleitung einmündet. In der Rückführleitung befinden sich als wesentliche Elemente ein Auslaßventil und in Strömungsrichtung auf dieses folgend eine Rückförderpumpe. Zweckmäßigerweise ist parallel zum Ventil 10 zur Überbrückung des ersten Sitzventiles 30 ein Rückschlagventil 58 zwischen Druckmittelauslaß und Druckmitteleinlaß angeordnet das bei Druckentlastung des Hauptbremszylinders eine ungedrosselte Rückströmung vom Radbremszylinder zum Hauptbremszylinder ermöglicht.

### Die Funktion des Ventiles 10 wird nachfolgend anhand der erwähnten Bremsanlage erläutert:

Bei einer vom Fahrer des Fahrzeugs ausgelösten Bremsung ohne Blockiergefahr nimmt das Ventil 10 seine gezeichnete Ruhestellung ein, d.h. das erste Sitzventil 30 ist geöffnet, ebenso das zweite Ventil 51. Der durch Betätigen des Hauptbremszylinders erzeugte Druck bewirkt durch Verschieben von Druckmittelteilmengen in der Bremsleitung einen Druckanstieg im Radbremszylinder. Wie anhand von Figur 2 erläutert und mittels Pfeilen verdeutlicht wird, tritt das verschobene Druckmittel von der Stufenbohrung 28 kommend in den Ventilsitz 29 ein und verläßt diesen als ersten Teilvolumenstrom unter Umströmung des Schließglieds 14 als hohlkegelförmiger Druckmittelstrahl. Dieser bewirkt in der Ventilteilkammer 43 keinen nennenswerten Staudruck, da diese durch den ersten Druckmittelkanal 45 und den zweiten Druckmittelkanal 48 sowie die druckmittelleitende Verbindung zwischen der Steuerkammer 46 und der Ausgleichskammer 51 sowie das offene zweite Sitzventil 51 mit dem Druckmittelauslaß verbunden ist. Das in die als Stauraum wirkende Ventilteilkammer 43 eingetretene Druckmittel verläßt im wesentlichen unter Umkehrung seiner Strömungsrichtung als zweiten Teilvolumenstrom den Radialspalt 39 und gelangt durch den Axialspalt 40 sowie die Ventilkammer 35 zum Druckmittelauslaß. Bei vom Hauptbremszylinder her erfolgender Druckentlastung nimmt das Druckmittel seinen Weg in umgekehrter Strömungsrichtung durch den Axialspalt 40 und das geöffnete erste Sitzventil 30 in Richtung auf den Hauptbremszylinder sowie durch das parallel zum Ventil 10 angeordnete Rückschlagventil 58.

Bei einer Bremsung mit Blockiergefahr wird das Ventil 10 durch Erregen der Magnetspule 17 in die Arbeitsstellung geschaltet, in welcher durch Verschieben des Magnetankers 21 entgegen der Kraft der Rückstellfeder 31 das erste Sitzventil 30 in seine Schließstellung überführt ist. Etwa nach dem halben Arbeitshub des Magnetankers 21 hat auch das zweite Sitzventil 51 die Verbindung zwischen der Steuerkammer 46 und der Ausgleichskammer 49 abgesperrt. Gleichzeitig werden das Auslaßventil in der Rückführleitung (siehe Figur 1 in DE 39 34 771 C1) in die Durchlaßstellung geschaltet und die Rückförderpumpe in Betrieb gesetzt. Durch Entnahme von Druckmittelteilmengen aus dem Radbremszylinder und Rückförderung zum Hauptbremszylinder wird radbremsseitig Druck abgebaut und die Blockiergefahr gemindert. In der auf einen Druckabbau folgenden Phase für Druckhalten im Radbremszylinder verbleibt das Ventil 10 in der Arbeitsstellung, während das Auslaßventil in der Rückführleitung in die Schließstellung geschaltet wird.

Für den Druckaufbau im Radbremszylinder verbleibt das Auslaßventil in der Schließstellung, während das Ventil 10 nicht mehr erregt wird. Dies bewirkt ein Verschieben des Magnetankers 21 aufgrund der Wirkung hydraulischer Kräfte und der Rückstellfeder 31 in Richtung auf die Steuerkammer 46, so daß das Schließglied 24 den Ventilsitz 29 freizugeben beginnt und das erste Sitzventil 30 geöffnet wird. Aufgrund des Druckabbaus im Radbrems- zylinder herrscht ein Druckgefälle zwischen der Einlaßseite und der Auslaßseite des ersten Sitzventils 30. Der auslaßseitige, niedrigere Druck ist auch durch den zweiten Druckmittelkanal 48 in der Ausgleichskammer 49 wirksam. Während der Öffnungsbewegung des Magnetankers 21 wird zusätzlich der vom hauptbremszylinderseitig nachströmenden Druckmittel erzeugte Staudruck in der Ventilteilkammer 43 durch den ersten Druckmittelkanal 45 in der Steuerkammer 46 wirksam, da das zweite Sitzventil 51 die Verbindung zwischen der Steuerkammer 46 und der Ausgleichskammer 49 geschlossen hält. Das während eines Teils des Rückhubs des Magnetankers 21 noch geschlossene zweite Sitzventil 51 verhindert somit einen Druckausgleich zwischen der Steuerkammer 46 und der Ausgleichskammer 49. Der nicht druckausgeglichene Magnetanker 21 unterliegt daher einer der Rückstellfeder 31 entgegengerichteten Kraft, die den Magnetanker 21 mit seinem Ventilstößel 22 eine Stellung zwischen der Schließstellung und der Offenstellung des ersten Sitzventils 30 einnehmen läßt. Die hierdurch hervorgerufene Minderung des Durchflußquerschnittes des ersten Sitzventils 30 bewirkt eine Drosselung des Druckmittelstromes mit verlangsamtem Druckanstieg im Radbremszylinder. Bei ausreichendem Druckgefälle regelt das Ventil 10 die Durchflußmenge auf ein weitgehend konstantes Maß, weil ein höherer Differenzdruck einen größeren Staudruck mit daraus resultierender Minderung des Durchflußquerschnitts am ersten Sitzventil 30 und umgekehrt bewirkt. Mit dem Abklingen des Druckgefälles verringert sich auch der Staudruck in der Ventilteilkammer 43. Die Rückstellfeder 31 führt den Magnetanker 21 in seine Ruhestellung zurück, in welcher das zweite Sitzventil 51 seine Offenstellung einnimmt. Das Ventil 10 gibt nun seinen vollen Durchflußquerschnitt im ersten Sitzventil 30 für die folgende normale Bremsung frei. Wird jedoch bei gemindertem Durchflußquerschnitt des ersten Sitzventils 30 die Bremsung durch Entlasten des Hauptbremszylinders abgebrochen, so kann das Druckmittel auch unverzögert aus dem Radbremszylinder durch das Rückschlagventil 58 abströmen.

Die Empfindlichkeit des Ventiles 10 in Richtung auf kleinere Druckgefälle ist durch die in Figur 4 dargestellte Variante des ersten Sitzventils 30 mit Leitkörper 38 steigerbar. Bei dieser Ausgestaltung ist der Ventilkörper 27 mit einem gegen den Ventilstößel 22 gerichteten, zapfenförmigen Ansatz 27' versehen. Dieser Ansatz 27' weist den Ventilsitz 29 auf. Der Leitkörper 38 ist über das Schließglied 24 hinaus axial verlängert und umgreift den Ansatz 27' unter Bildung eines zweiten Radialspaltes 39'. Der erste Radialspalt 39 und der Axialspalt 40 sind bei dieser Variante ebenfalls vorhanden . Der zweite Radialspalt 39' bewirkt eine Steigerung des Staudruckes in der Ventilteilkammer 43 gegenüber der vorbeschriebenen ersten Ausführungsform.

## Patentansprüche

1. Elektromagnetisch betätigtes Ventil (10), insbesondere für schlupfgeregelte hydraulische Bremsanlagen in Kraftfahrzeugen, mit folgenden Merkmalen:
- in einem geschlossenen Ventildom (14) ist ein Magnetanker (21) längsbwegbar aufgenommen,
- der Ventildom (14) ist von einer Magnetspule (17) umgriffen,
- vom Magnetanker (21) geht ein Ventilstößel (22) mit einem ankerabgewandt angeordneten Schließglied (24) aus,
- in einem Gehäuse (11) des Ventils (10) ist ein Ventilkörper (27) mit einem Ventilsitz (29) als Druckmitteleinlaß befestigt,
- bei nicht erregter Magnetspule (17) ist das Schließglied (24) aufgrund der Wirkung einer Rückstellfeder (31) vom Ventilsitz (29) abgehoben,
- das Schließglied (24) und der den Ventilsitz (29) aufweisende Teil des Ventilkörpers (27) befinden sich, ein erstes Sitzventil (30) bildend, in einer Ventilkammer (35), welche mit einem Druckmittelauslaß des Ventils (10) in Verbindung steht,
- die Ventilkammer (35) weist eine als Stauraum wirkende Ventilteilkammer (43) auf, von der ein erster Druckmittelkanal (45) zu einer Steuerkammer (46) ausgeht, die zwischen der schließgliedfernen Stirnseite (47) des Magnetankers (21) und dem Ventildom (14) gelegen ist,
- von der Ventilkammer (35) führt ein zweiter Druckmittelkanal (48) zu einer Ausgleichskammer (49), die zwischen der schließgliednahen Stirnseite (50) des Magnetankers (21) und einem Polkern (13) des Ventils (10) angeordnet ist,
- ein in der Ventilteilkammer (43) erzeugter Druck vermag in der Steuerkammer (46) eine entgegen der Kraft der Rückstellfeder (31) auf den Magnetanker (21) wirkende Kraft hervorzurufen, aufgrund der das Sitzventil (30) eine von seiner Ruhestellung abweichende, teilgeschlossene Stellung einnimmt, gekennzeichnet durch die weiteren Merkmale:
- zwischen der Steuerkammer (46) und der Ausgleichskammer (49) ist eine umfangsseitig des Magnetankers (21) verlaufende, druckmittelleitende Verbindung vorgesehen,
- die druckmittelleitende Verbindung ist durch ein zweites Sitzventil (51) schaltbar,
- in der Ruhestellung und bei einem an diese anschließenden, ersten Teilhub des Magnetankers (21) ist die druckmittelleitende Verbindung durchgängig,
- in der Arbeitsstellung und bei einem an diese anschließenden, zweiten Teilhub des Magnetankers (21) ist die druckmittelleitende Verbindung vom zweiten Sitzventil (51) verschlossen.

2. Ventil nach Anspruch 1, dadurch gekennzeichnet, daß am Magnetanker (21) ein axial elastisch nachgiebiger, mit dem Polkern (13) des Ventils (10) als Ventilsitz zusammenwirkender Schließkörper (54) aufgenommen ist.

3. Ventil nach Anspruch 2, dadurch gekennzeichnet, daß der Schließkörper (54) ein umfangsseitig an dem Magnetanker (21) aufgenommener, gerader Hohlzylinder aus Kunststoff ist, der mit etwa der halben Hublänge des Magnetankers (21) über dessen schließgliednahe Stirnseite (50) ragt.

4. Ventil nach Anspruch 3, dadurch gekennzeichnet, daß der Schließkörper (54) im polkernfernen Bereich mit Preßsitz und im übrigen Bereich axial bewegbar an dem Magnetanker (21) aufgenommen ist.

5. Ventil nach Anspruch 1, dadurch gekennzeichnet, daß das Schließglied (24) des ersten Sitzventils (30) zumindest ventilsitzseitig kugel- oder kegelförmig ausgestaltet und von einem gleichachsig zum Ventilstößel (22) an diesem angeordneten, hülsenförmigen Leitkörper (38) bis nahe an den Ventilkörper (27) umgriffen ist, derart, daß der vom Ventilsitz (29) ausgehende Druckmittelstrahl in den Spalt (39) zwischen dem Schließglied (24) und dem Leitkörper (38) eintritt, und daß von diesem Spalt (39) eine gegen die Ventilkammer (35) abgeschirmte, druckmittelleitende Verbindung zum ersten Druckmittelkanal (45) ausgeht.

6. Ventil nach Anspruch 5, dadurch gekennzeichnet, daß der Ventilsitz (29) des ersten Sitzventils (30) in einem zapfenförmigen Ansatz (27') des Ventilkörpers (27) angeordnet und dieser Ansatz (27') von dem Leitkörper (38) des Ventilstößels (22) umfangsseitig übergriffen ist.

## Claims

1. Electromagnetically actuated valve (10), particularly for slip-controlled hydraulic brake systems in motor vehicles, with the following features:
- a magnet armature (21) is accommodated in longitudinally movable fashion in a closed valve dome (14),
- the valve dome (14) is surrounded by a solenoid (17),
- emanating from the magnet armature (21) is a valve tappet (22) with a closing member (24) arranged at the end remote from the armature,
- a valve body (27) with a valve seat (29) as a pressure-medium inlet is secured in a housing (11) of the valve (10),
- with the solenoid (17) unexcited, the closing member (24) is raised from the valve seat (29) due to the action of a return spring (31),
- the closing member (24) and that part of the valve body (27) which has the valve seat (29) form a first seat valve (30) and are situated in a valve chamber (35) which is connected to a pressure-medium outlet of the valve (10),
- the valve chamber (35) has a valve subchamber (43) which acts as a retaining space and from there emanates a first pressure-medium passage (45) leading to a control chamber (47) situated between that end (47) of the magnet armature (21) which is remote from the closing member and the valve dome (14),
- a second pressure-medium passage (48) leads from the valve chamber (35) to a balance chamber (49) which is arranged between that end (50) of the magnet armature (21) which is close to the closing member and a pole core (13) of the valve (10),
- a pressure generated in the valve subchamber (43) is capable of bringing about in the control chamber (46) a force which acts on the magnet armature (21) counter to the force of the return spring (31) and due to which the seat valve (30) assumes a partially closed position which differs from its rest position,
characterized by the following further features:
- a pressure-medium-transmitting connection along the circumference of the magnet armature (21) is provided between the control chamber (46) and the balance chamber (49),
- the pressure-medium-transmitting connection is controlled by a second seat valve (51),
- in the rest position and during a first partial stroke of the magnet armature (21) following on from this rest position, the pressure-medium-transmitting connection is open,
- in the working position and during a second partial stroke of the magnet armature (21) following on from this position, the pressure-medium-transmitting connection is closed by the second seat valve (51).

2. Valve according to Claim 1, characterized in that a closing element (54) which is elastically flexible in the axial direction and interacts with the pole core (13) of the valve (10) as the valve seat is mounted on the magnet armature (21).

3. Valve according to Claim 2, characterized in that the closing element (54) is a straight hollow cylinder which is made of plastic, is mounted on the circumference of the magnet armature (21) and projects beyond the end (50) of the magnet armature (21) close to the closing element by about half the stroke length of said magnet armature (21).

4. Valve according to Claim 3, characterized in that the closing element (54) is mounted on the magnet armature (21) with a press fit in the area remote from the pole core and in axially movable fashion in the remaining area.

5. Valve according to Claim 1, characterized in that the closing element (24) of the first seat valve (30) is of spherical or conical design at least on the valve-seat side and is surrounded to within a short distance of the valve body (27) by a sleeve-shaped baffle element (38) arranged on the valve tappet (22), coaxially with the latter, such that the pressure-medium jet emerging from the valve seat (29) enters the gap (39) between the closing element (24) and the baffle element (38), and in that a pressure-medium-transmitting connection with the first pressure-medium passage (45), which connection is screened off from the valve chamber (35), starts from this gap (39).

6. Valve according to Claim 5, characterized in that the valve seat (29) of the first seat valve (30) is arranged in a stud-shaped extension (27') of the valve body (27), and this extension (27') is overlapped at the circumference by the baffle element (38) of the valve tappet (22).

## Revendications

1. Soupape (10) à commande électromagnétique notamment pour des installations de freins hydrauliques à régulation de patinage pour des véhicules automobiles, ayant les caractéristiques suivantes :
- le dôme fermé (14) de la soupape loge un induit magnétique (21) mobile longitudinalement,
- le dôme (14) est entouré par une bobine électromagnétique (17),
- l'induit magnétique (21) se poursuit par une tige de soupape (22) muni d'un organe d'obturation (24) sur le côté opposé de celui de l'induit,
- un corps de soupape (27) avec un siège de soupape (29) est fixé comme entrée de fluide sous pression dans le boîtier (11) de la soupape (10),
- lorsque la bobine électromagnétique (17) n'est pas excitée, l'organe d'obturation (24) est soulevé du siège de soupape (29) par l'effet d'un ressort de rappel (31),
- l'organe d'obturation (24) et la partie du corps de soupape (17) correspondant au siège de soupape (29) se trouvent, en formant une première soupape à siège (30), dans une chambre de soupape (35) communiquant avec une sortie de liquide sous pression de la soupape (10),
- la chambre de soupape (35) comporte une chambre partielle (43) fonctionnant comme chambre de retenue, d'où est issu un premier canal de liquide sous pression (45) vers une chambre de commande (46), située entre la face frontale (47) éloignée de l'organe d'obturation de l'induit magnétique (21) et le dôme de soupape (14),
- un second canal de liquide sous pression (48) relie la chambre à soupape (35) à une chambre de compensation (49) située entre la face frontale (50) proche de l'organe d'obturation de l'induit magnétique (21) et un noyau polaire (13) de la soupape (10),
- une pression dans la chambre partielle de soupape (43) peut engendrer dans la chambre de commande (46), une force agissant sur l'induit magnétique (21) contre la force du ressort de rappel (31), force par laquelle le siège de soupape (30) prend une position partiellement fermée différente de sa position de repos,
caractérisée en ce que
- entre la chambre de commande (46) et la chambre de compensation (49) se trouve une liaison de conduite de fluide sous pression passant à la périphérie de l'induit magnétique (21),
- la liaison pour le fluide sous pression est commutée par une seconde soupape à siège (51),
- en position de repos et au cours de la première course partielle de l'induit d'aimant (21) adjacente à cette position de repos, la liaison de passage du fluide sous pression est ouverte,
- dans la position de travail et pour une seconde course partielle de l'induit de l'aimant (21) adjacente à cette position de travail, la liaison de passage du fluide sous pression à partir de la seconde soupape à siège (51) est fermée.

2. Soupape selon la revendication 1,
caractérisée en ce que
l'induit magnétique (21) reçoit un organe d'obturation (54), souple élastiquement dans la direction axiale, et coopérant comme siège de soupape avec le noyau polaire (13) de la soupape (10).

3. Soupape selon la revendication 2,
caractérisée en ce que
l'organe d'obturation (54) est un cylindre creux, droit en matière plastique, logé par sa face extérieure sur l'induit magnétique (21), ce cylindre dépassant sensiblement de la moitié de la longueur de la course de l'induit magnétique (21) de sa face frontale (50) proche de l'organe d'obturation.

4. Soupape selon la revendication 3,
caractérisée en ce que
l'organe d'obturation (54) est monté sur l'induit magnétique (21) suivant un siège pressé dans la zone éloignée du noyau polaire et pour le reste de la zone, mobile axialement.

5. Soupape selon la revendication 1,
caractérisée en ce que
- l'organe d'obturation (24) du premier siège de soupape (30) a une forme au moins en siège de soupape sphérique ou conique et il est entouré jusqu'à proximité du corps de soupape (27), par un corps de guidage (38) en forme de manchon, coaxial à la tige de soupape (22) en étant monté sur celui-ci, et
- le jet de fluide sous pression sortant du siège de soupape (29) pénètre dans l'intervalle (39) entre l'organe d'obturation (24) et le corps de guidage (38), et
- à partir de cet intervalle (39) commence une première liaison pour du fluide sous pression, protégée par rapport à la chambre de soupape (35) et allant vers le premier canal de fluide sous pression (45).

6. Soupape selon la revendication 5,
caractérisée en ce que
le siège de soupape (29) de la première soupape à siège (30) est prévu dans un prolongement en forme de téton (27') du corps de soupape (27) et ce prolongement (27') est entouré du côté périphérique par le corps de guidage (38) de la tige de soupape (22).
